Europäisches Patentamt

European Patent Office

Office européen des brevets

(11) Veröffentlichungsnummer: **0 265 595 B1**

# EUROPÄISCHE PATENTSCHRIFT

(45) Veröffentlichungstag der Patentschrift: **15.01.92**

(21) Anmeldenummer: **87109259.9**

(22) Anmeldetag: **27.06.87**

(51) Int. Cl.⁵: **G01D 15/24**, G07C 5/12

(54) **Anordnung zum Antreiben einer Diagrammscheibe.**

(30) Priorität: **27.08.86 DE 3629139**

(43) Veröffentlichungstag der Anmeldung:
**04.05.88 Patentblatt 88/18**

(45) Bekanntmachung des Hinweises auf die
Patenterteilung:
**15.01.92 Patentblatt 92/03**

(84) Benannte Vertragsstaaten:
**DE ES FR GB IT**

(56) Entgegenhaltungen:
**DE-A- 2 659 642**
**DE-A- 2 725 242**
**DE-B- 1 266 036**
**DE-C- 1 201 075**

(73) Patentinhaber: **Mannesmann Kienzle GmbH**
**Postfach 1640 Heinrich-Hertz-Strasse**
**W-7730 Villingen-Schwenningen(DE)**

(72) Erfinder: **Helmschrott, Norbert**
**Wasenstrasse 94**
**W-7730 Villingen-Schwenningen(DE)**
Erfinder: **Säger, Benjamin**
**Brunnenstrasse 26**
**W-7730 Villingen-Schwenningen(DE)**
Erfinder: **Kirner, Herbert**
**Wolfstiegweg 4**
**W-7730 Villingen-Schwenningen(DE)**

## Beschreibung

Die Erfindung betrifft eine Anordnung zum Antreiben einer Diagrammscheibe in einem mit einem Laufwerk ausgerüsteten Registriergerät, in welches die Diagrammscheibe durch einen Schlitz eingebbar und mittels eines durch einen senkrecht zur Diagrammscheibe verschwenkbaren Arm heb- und senkbaren Dorns zentrierbar ist.

Steht bei Registrieraufgaben die Sofortinformation im Vordergrund, so ist eine visuell lesbare Aufzeichnung der interessierenden Daten unerläßlich. Kommt hinzu, daß die Aufzeichnungen lediglich innerhalb eines bestimmten Zeitabschnitts bzw. für einen zeitlich begrenzten Vorgang erfolgen sollen, personenbezogen sind und unter Umständen an verschiedenen Orten vorzunehmen sind, so ist die Diagrammscheibe der für diese Registrieraufgabe geeignetste Aufzeichnungsträger.

Das betreffende Registriergerät muß, um vielseitig, beispielsweise auch als reines Registriermodul verwendbar zu sein, preisgünstig sein, was eine relativ einfache, insbesondere jedoch eine für die Großserie geeignete Bauweise bedingt. Das Registriergerät sollte ferner möglichst wenig Raum in Anspruch nehmen, also in erster Linie flach gebaut sein, und es sollte sich durch eine hohe Funktionssicherheit und möglichst einfache Bedienbarkeit auszeichnen.

Mit der DE-B-1 201 075 ist ein gattungsgemäß gleiches Registriergerät bekannt geworden, bei dem der die Diagrammscheiben zentrierende Dorn auf einer im Gehäuse des Registriergerätes befestigten Achse verschiebbar gelagert und mit einer Diagrammscheibenauflage kuppelbar ist, welche von einem in Achsrichtung des Zentrierdorns angeordneten Laufwerk angetrieben wird. Der gleiche Registriergerätetyp ist auch in der DE-B-1 266 036 beschrieben, wobei hervorgehoben ist, daß das Registriergerät für eine bessere Einbaufähigkeit insbesondere flach ausgebildet ist.

Abgesehen davon, daß bei der in diesen Patenten gezeigten Lösung einer Zentrier- und Antriebsanordnung ein Heben und Senken des Zentrierdorns und, was bei Diagrammscheiben mit aufgedruckter Zeitskale erforderlich ist, ein zeitrichtiges Ausrichten der Diagrammscheibe mittels des Zentrierdorns durch geeignete Mittel von Hand erfolgt, ergeben die axiale Anordnung von Laufwerk und Zentrierdorn und die erhebliche Länge des Zentrierdorns sowohl eine sehr ungünstige Bauhöhe, als auch eine relativ schlechte Nutzung des im wesentlichen durch den Durchmesser der verwendeten Diagrammscheibe bestimmten Geräteraumes. Außerdem ist die mit dem Gegenstand des oben genannten Patentes bekanntgewordene Diagrammscheiben-Zentrier- und Antriebsanordnung für die Großserie ungeeignet, weil, abgesehen von der aufwendigen Konstruktion, die Achse des Zentrierdorns in einem ersten Gehäusebauteil angeordnet ist, während sich die Diagrammscheibenauflage, mit der der Zentrierdorn gekuppelt werden soll, in einem zweiten Gehäusebauteil befindet. Diese Bauweise ist wenig wartungsfreundlich und erfordert einerseits eine unangemessen hohe Genauigkeit der Gehäuseverbindung, andererseits muß eine von außen zugängliche Justiermöglichkeit vorgesehen werden, um die bei dieser Bauweise erheblichen Toleranzadditionen zwischen Zentrierdorn und Diagrammscheibenauflage ausschalten zu können.

Das bereits dargestellte Anforderungsprofil eines derartigen Registriergerätes wird somit von der konstruktiven Gestaltung des Diagrammscheibenantriebes entscheidend beeinflußt. Der Erfindung war daher die Aufgabe gestellt, für ein Registriergerät, in welches die als Aufzeichnungsträger verwendeten Diagrammscheiben durch einen Schlitz eingebbar sind, eine Diagrammscheiben-Zentrier- und Antriebsanordnung zu schaffen, welche die Mängel des bereits bekannten Gerätes vermeidet und den Bau eines dem Anforderungsprofil entsprechendne Registriergerätes ermöglicht.

Die Lösung dieser Aufgabe sieht vor, daß der Zentrierdorn auf einer an dem schwenkbaren Arm befestigten Achse gelagert ist und mit dem Laufwerk in einer stetigen getrieblichen Verbindung steht, derart daß die Zahnräder des Laufwerkes wenigstens zum Teil auf dem schwenkbaren Arm gelagert sind.

Ein bevorzugtes Ausführungsbeispiel ist dadurch gekennzeichnet, daß ein auf dem Arm gelagertes Zahnrad in der Ebene der Schwenkachse des Armes angeordnet ist und im Bereich der Schwenkachse des Armes mit einem ortsfesten Getriebeelement des Laufwerkes in Eingriff steht.

Die Erfindung schlägt für ein Registriergerät der im Oberbegriff genannten Gattung eine Architektur vor, welche sowohl bauteile- und raumoptimiert, als auch produktiv herstellbar ist. Der Gedanke, den bisherigen stockwerksartigen Aufbau aufzugeben und die Bauteile des Diagrammscheibenantriebes flach zu verteilen, sozusagen einem flachen, die Diagrammscheibe umgebenden Raum zuzuordnen, ermöglicht die angestrebte, flache Bauweise des gesamten Registriergeräts. Dabei ist selbst bei einem relativ geringen Kippwinkel des schwenkbaren Armes ein ausreichender Hub des Zentrierdorns erzielbar. Ebenso läßt sich der Zentrierdorn nicht nur besonders einfach und exakt lagern, es kann auch auf eine Federung des Zentrierdorns verzichtet werden. Vorteilhaft ist bei der gefundenen Lösung ferner, daß beim Wechseln der Diagrammscheiben das Getriebe zwischen Laufwerk und Zentrierdorn stets in Eingriff bleibt und daß aus dem Laufwerk und dem schwenkbaren Arm ein vormontierbares und auf relativ einfache Weise in das Registriergerät einsetzbares Antriebsaggregat gebildet werden kann. Außerdem bietet die gefundene Lösung trotz hoher Packungsdichte der Bauteile eine erleichterte Zugänglichkeit und somit eine verbesserte Wartungsfähigkeit des Registriergerätes.

Im folgenden sei die Erfindung anhand der beigefügten Zeichnungen näher erläutert. Es zeigen

FIG. 1 eine Frontansicht des gattungsgemäßen Registriergerätes,

FIG. 2 eine Draufsicht auf ein bevorzugtes Ausführungsbeispiel der erfindungsgemäßen Anordnung in einem Zustand, in welchem eine Diagrammscheibe eingelegt werden kann, d. h. der Arm angehoben ist,

FIG. 3 eine Schnittdarstellung gemäß der Schnittlinie A-B in FIG. 2,

FIG. 4 einen Teilschnitt gemäß der Schnittführung C-D in FIG. 2 mit eingelegter Diagrammscheibe.

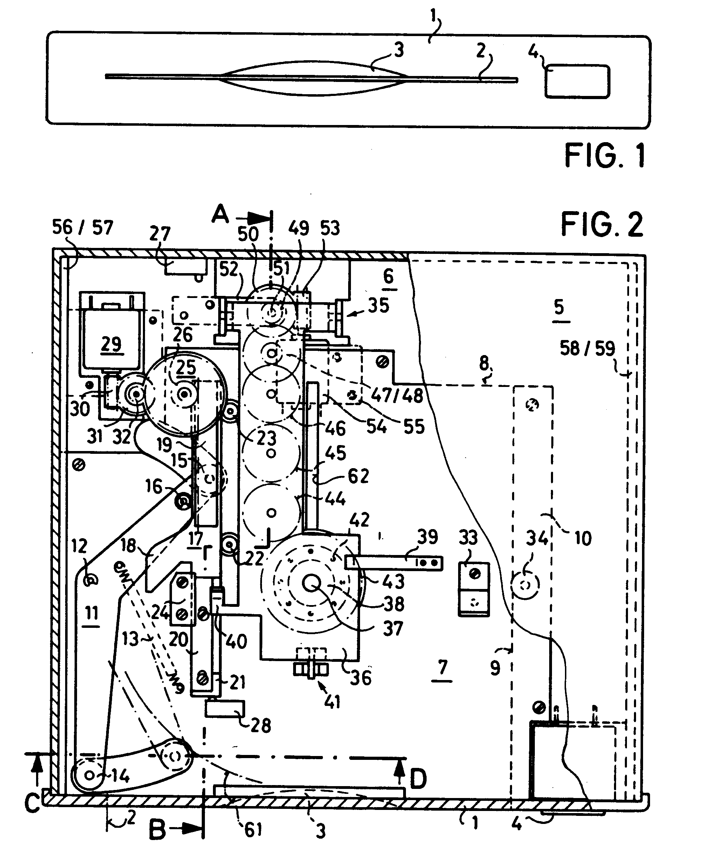

Die Frontseite des in FIG. 1 dargestellten Registriergerätes, in welchem die erfindungsgemäße Diagrammscheiben-Zentrier- und Antriebsanordnung vorgesehen ist, wird von einer Frontplatte 1 gebildet, in welcher ein Schlitz 2 und eine diesem zugeordnete Griffmulde 3 für das Eingeben und Entnehmen von Diagrammscheiben ausgebildet sind. Mit einer vorzugsweise als Leuchttaste ausgebildeten Taste 4 ist das Ausgeben einer beschriebenen Diagrammscheibe steuerbar. Der Taste 4 kann ein eine mit dem Schlitz 2 zusammenwirkende Verriegelung steuerndes Schloß zugeordnet sein, so daß das Registriergerät, dessen Gehäuse in FIG. 2 mit 5 bezeichnet ist, lediglich von einem hierzu befugten Personenkreis bedienbar ist.

Aus FIG. 2 ist ersichtlich, daß ein als Montageplatte dienender Zwischenboden 6 und eine dem Zwischenboden 6 parallel zugeordnete Platte 7 einen der Führung und Aufnahme einer Diagrammscheibe dienenden Schacht 8 bilden, welcher durch den frontseitigen Schlitz 2 zugänglich ist. Die Stirnwand 9 einer zwischengefügten, den Schacht 8 seitlich begrenzenden Leiste 10 bildet beim Transport einer Diagrammscheibe in die Zentrierposition eine mittelbar über die Diagrammscheibe mit einem zweiarmigen Hebel 11 zusammenwirkende Führungsfläche. An den Enden des Hebels 11, der auf einer auf der Platte 7 befestigten Achse 12 verschwenkbar gelagert ist und unter der Wirkung einer Zugfeder 13 steht, sind Rollen 14 und 15 gelagert, die - im Zwischenboden 6 und in der Platte 7 sind geeignete, nicht näher bezeichnete Aus-bzw. Freisparungen vorgesehen - durch den Schacht 8 hindurchragen und beim Transport einer Diagrammscheibe stirnseitig an dieser angreifen. Die Zugfeder 13 hält den Hebel 11 über eine auf ihm gelagerte Rolle 16 in kraftschlüssiger Verbindung mit einem Schlitten 17, an dem eine mit der Rolle 16 zusammenwirkende Steuerkurve 18 ausgebildet ist. Der Schlitten 17 trägt ferner eine Zahnstange 19 und eine einstellbar angeordnete Rampe 20, an der eine schiefe Ebene 21 vorgesehen ist. Er ist verschiebbar geführt zwischen einerseits Ansatzrollen 22 und 23 andererseits einem Führungsbock 24 und einem Zahnradpaar 25/26, dessen eines Zahnrad 26 mit der Zahnstange 19 in Eingriff steht. Der Antrieb des Schlittens 17, der mit die Zentrier- und die Entnahmeposition festlegenden Schaltern 27 und 28 zusammenwirkt, geht aus von einem Elektromotor 29 und wird mittels einer auf der Motorwelle befestigten Schnecke 30, einem mit dieser in Eingriff stehenden Schneckenrad 31 sowie einem Zahnrad 32, welches mit dem Zahnrad 35 kämmt, auf den Schlitten 17 übertragen.

Ausgelöst wird der Antrieb der geschilderten Transportanordung dadurch, daß eine von Hand in den Schacht 8 eingeführte Diagrammscheibe einen lichtelektrischen Sensor 33 schaltet. Nachfolgend führt der Hebel 11 die eingegebene Diagrammscheibe, indem die Rolle 14 stirnseitig an der Diagrammscheibe angreift, in ihre Zentrierposition. Dabei rollt die Diagrammscheibe an der Stirnwand 9 ab und wird in der Zentrierposition zwischen den Führungsrollen 14 und 15 sowie einer in einer geeigneten Freisparung in der Leiste 10 gelagerten Rolle 34 lose gehalten.

Wie die FIG. 2 ferner zeigt, wirkt der Schlitten 17 auch auf einen in einer am Zwischenboden 6 ausgebildeten Lagerbrücke 35 schwenkbaren Arm 36 ein, welcher einen auf einer Achse 37 drehbar gelagerten Zentrierdorn 38 trägt. Der Arm 36, an dem eine Blattfeder 39 angreift, steht dabei über einen Mitnehmer 40 mit der Rampe 20 in Wirkverbindung. Eine Stift-Schlitz-Verbindung 41 dient der genauen Lagefixierung des Armes 36 in der abgesenkten Position. An dem Zentrierdorn 38, dem an einer nicht näher bezeichneten Schulter Mitnehmerspitzen oder ähnliche Mitnahmemittel, von denen eine mit 42 bezeichnet ist, zugeordnet sind, ist ein Zahnkranz 43 ausgebildet. Dieser steht in Eingriff mit einer auf dem Arm 36 gelagerten Getriebekette 44 bis 48, deren eines Zahnrad 48 im Bereich der Schwenkachse des Armes 36 mit einem ortsfesten Zahnrad 49 des antreibenden Laufwerkes in Eingriff steht. Das Zahnrad 49 und ein mit diesem ein Zahnradpaar bildendes Schneckenrad 50 sind auf einer Achse 51 gelagert, die an einem am Zwischenboden 6 befestigten Winkel 52 angebracht ist. Mit dem Schneckenrad 50 in Eingriff steht eine Schnecke 53, welche auf der Motorwelle eines den zeitabhängigen Antrieb des Zentrierdorns 38 liefernden Elektromotors 54 angeordnet ist, welcher einerseits mittels einer Platte 55 austauschbar mit dem Zwischenboden 6 verbunden ist.

Um eine bessere Raumnutzung zu erzielen, kann bei geeigneter Ausbildung der Lagerbrücke 35 der Elektromotor 54 in ähnlicher Weise wie der Elektromotor 29 in den Zwischenboden eingelassen angeordnet werden. Außerdem ist es denkbar, den Elektromotor 54 unmittelbar an dem entsprechend ausgebildeten, d.h. verbreiterten Arm 36 zu befestigen, wodurch ein in das Registriergerät einsetzbares autonomes Antriebsaggregat gebildet werden kann.

Der Vollständigkeit halber sei noch erwähnt, daß der Raum 60 unterhalb des Zwischenbodens 6 für elektronische Schaltungskomponenten vorgesehen ist. Eine diese tragende Leiterplatte könnte dem Zwischenboden 6 zugeordnet sein. Auf diese Weise entsteht ein sehr flacher Einschub, der in am Gehäuse angeordneten Schienen 56, 57 und 58, 59 geführt ist.

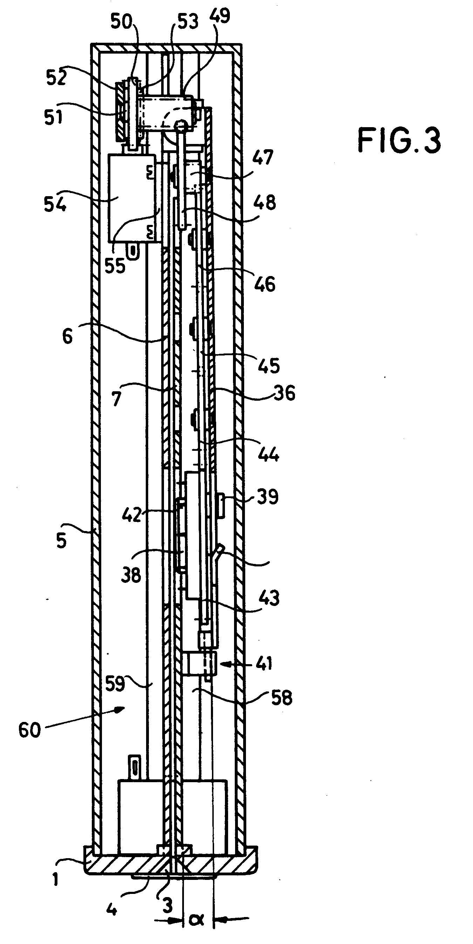

Die Schnittdarstellung FIG. 3 zeigt, daß der Schwenkwinkel des relativ langen Armes 36 sehr gering ist und somit das übliche Zahnspiel zwischen den Zahnräder 48 und 49 eine Drehbewegung des Zahnrades 48 quer zur Achse 51 des Zahnrades 49 ohne Eingriffsunterbrechung gestattet.

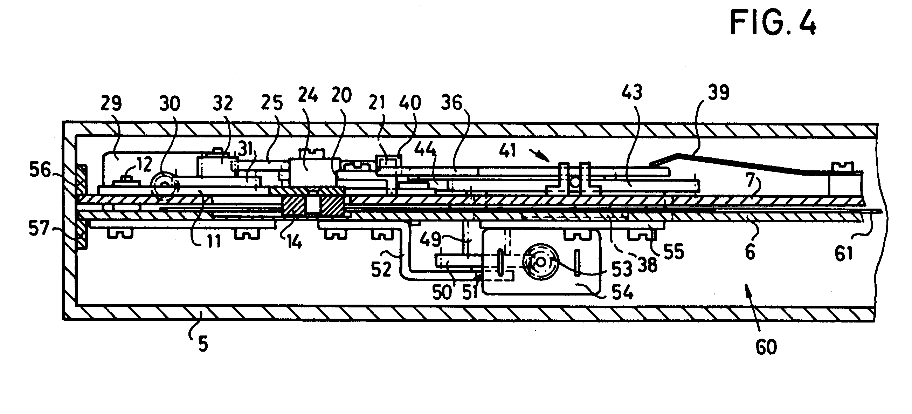

Während in FIG. 3 der Arm 36 angehoben dargestellt ist, zeigt der lediglich der Vervollständigung des dargestellten Ausführungsbeispieles dienenende Teilschnitt FIG. 4 den Arm 36 in abgesenkter Position bei eingelegter Diagrammscheibe 61.

Die beiden FIG. 3 und 4 machen die besonders niedrige Bauhöhe der erfindungsgemäßen Anordnung deutlich, die durch eine konsequente Raumnutzung, d. h. durch eine flächige Anpassung von Transportanordnung und Antriebsanordnung erzielt worden ist.

Es sei noch ergänzt, daß mit 62 (Figur 2) ein Schlitz in der Platte 7 bezeichnet ist, der dem Durchgreifen der nicht dargestellten Registrierorgane, beispielsweise eines Thermodruckkopfes, auf eine eingelegte Diagrammscheibe 61 dient.

**Patentansprüche**

1. Anordnung zum Antreiben einer Diagrammscheibe in einem mit einem Laufwerk ausgerüsteten Registriergerät, in welches die Diagrammscheibe durch einen Schlitz eingebbar und mittels eines durch einen senkrecht zur Diagrammscheibe verschwenkbaren Arm (36) heb- und senkbaren Dorns (38) zentrierbar ist, dadurch gekennzeichnet, daß der Zentrierdorn (38) auf einer an dem schwenkbaren Arm (36) befestigten Achse (37) gelagert ist und mit dem Laufwerk in einer stetigen getrieblichen Verbindung steht, derart daß die Zahnräder (44 bis 50) des Laufwerkes wenigstens zum Teil auf dem schwenkbaren Arm (36) gelagert sind.

2. Anordnung nach Anspruch 1, dadurch gekennzeichnet, daß die Zahnräder und der Motor (54) des Laufwerkes auf dem schwenkbaren Arm (36) gelagert sind.

3. Anordnung nach Anspruch 2, dadurch gekennzeichnet, daß ein auf dem Arm (36) gelagertes Zahnrad (48) in der Ebene der Schwenkachse des Armes (36) angeordnet ist und im Bereich der Schwenkachse des Armes (36) mit einem ortsfesten Getriebeelement des Laufwerkes (49) in Eingriff steht.

**Claims**

1. Arrangement for driving a graph chart in a recording device which is equipped with a drive and into which the graph chart may be introduced through a slot and may be centred by means of a mandrel (38) which may be raised and lowered by an arm (36) pivotal perpendicular to the graph chart, characterized in that the centring mandrel (38) is mounted on a spindle (37) secured to the pivotal arm (36) and is in a constant geared connection with the drive in such a way that the toothed wheels (44 to 50) of the drive are mounted at least partly on the pivotal arm (36).

2. Arrangement according to Claim 1, characterized in that the toothed wheels and the motor (54) of the drive are mounted on the pivotal arm (36).

3. Arrangement according to Claim 2, characterized in that a toothed wheel (48) mounted on the arm (36) is arranged in the plane of the axis of pivoting of the arm (36) and is in engagement, in the region of the axis of pivoting of the arm (36), with a fixed gear element of the drive (49).

**Revendications**

1. Dispositif pour l'entraînement d'un disque de diagramme dans un enregistreur équipé d'un mécanisme d'entraînement, dans lequel ledit disque de diagramme peut être introduit par une fente et être centré au moyen d'une broche (38) pouvant être soulevée et abaissée par un bras pivotant déplaçable (36) perpendiculairement audit disque de diagramme,

caractérisé par le fait
que ladite broche de centrage (38) est monté sur un axe (37) fixé sur ledit bras pivotant (36) et coopère fonctionnellement, en continu, avec le mécanisme d'entraînement, de telle sorte que les roues dentées (44 à 50) du mécanisme d'entraînement soient montées au moins partiellement sur le bras pivotant (36).

2.  Dispositif selon la revendication 1, caractérisé par le fait
que les roues dentées et le moteur (54) du mécanisme d'entraînement sont montés sur le bras pivotant (36).

3.  Dispositif selon la revendication 2, caractérisé par le fait
qu'une roue dentée (48) montée sur le bras (36) est disposée dans le plan de l'axe pivotant du bras (36) et engrène, dans la zone de l'axe pivotant dudit bras (36), avec un organe d'engrenage stationnaire du mécanisme d'entraînement (49).

FIG. 1

FIG. 2

FIG.3

FIG.4

EP 0 265 595 B1